(19) **Europäisches Patentamt / European Patent Office / Office européen des brevets**

(11) **EP 3 705 407 B1**

(12) # EUROPEAN PATENT SPECIFICATION

(45) Date of publication and mention of the grant of the patent:
**15.06.2022 Bulletin 2022/24**

(21) Application number: **18929038.0**

(22) Date of filing: **21.12.2018**

(51) International Patent Classification (IPC):
**B64F 5/60** $^{(2017.01)}$  **G01L 5/00** $^{(2006.01)}$
**G01M 5/00** $^{(2006.01)}$  **G01N 3/30** $^{(2006.01)}$

(52) Cooperative Patent Classification (CPC):
**G01M 5/0016; B64F 5/60; G01L 5/0052;**
B64D 2045/0085

(86) International application number:
**PCT/CN2018/122670**

(87) International publication number:
**WO 2020/029512 (13.02.2020 Gazette 2020/07)**

(54) **SMART AIRCRAFT SKIN IMPACT AREA POSITIONING METHOD BASED ON TRUNCATED REVERSE WEIGHTED SUM**

VERFAHREN ZUR POSITIONIERUNG EINES AUFPRALLBEREICHS EINER INTELLIGENTEN FLUGZEUGHAUT AUF DER BASIS EINER VERKÜRZTEN UMGEKEHRTEN GEWICHTETEN SUMME

PROCÉDÉ DE POSITIONNEMENT DE ZONE D'IMPACT DU REVÊTEMENT D'UN AÉRONEF INTELLIGENT SUR LA BASE D'UNE SOMME PONDÉRÉE INVERSE TRONQUÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2018 CN 201810907588**

(43) Date of publication of application:
**09.09.2020 Bulletin 2020/37**

(73) Proprietor: **Nanjing University of Aeronautics and Astronautics**
**Nanjing, Jiangsu 210016 (CN)**

(72) Inventors:
• **QIU, Lei**
**Nanjing, Jiangsu 210016 (CN)**
• **YUAN, Shenfang**
**Nanjing, Jiangsu 210016 (CN)**
• **REN, Yuanqiang**
**Nanjing, Jiangsu 210016 (CN)**
• **DENG, Xiaolei**
**Nanjing, Jiangsu 210016 (CN)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(56) References cited:
CN-A- 1 868 807          CN-A- 104 215 528
CN-A- 108 146 615          CN-A- 108 146 615
CN-A- 108 169 037          CN-Y- 201 151 484
US-A1- 2002 187 047          US-A1- 2016 252 438

**Description**

**FIELD OF THE INVENTION**

The present invention relates to a truncated reverse-weighted sum based impact region localization method of aircraft smart skin, belonging to the technical fields of aerospace smart structure and health monitoring.

**DESCRIPTION OF RELATED ART**

The basic idea of an aircraft smart skin technology is to integrate a large number of sensing/driving elements and a micro processing unit with a skin structure to form a whole, to monitor information about an environment, working state and health status of the structure through a large number of sensing elements, and to process the information via the micro processing unit to form a control stimulus, thereby changing the shape, motion, stress state and the like of the structure. The smart skin technology makes the skin structure have the capabilities of self-diagnosing, self-adapting, self-learning, self-repairing, etc. Therefore, the aircraft smart skin technology is an important technical guarantee to improve the flight performance, operational maneuverability, environmental sensing performance and safety maintenance performance of an advanced aircraft.

In recent years, composites have been widely used in aircraft structures because of the high specific stiffness, strong resistance to fatigue and corrosion, and flexible design. An aircraft composite smart skin structure (hereinafter referred to as an aircraft smart skin structure) is a research and application hot spot, where structural health monitoring and diagnosis is one of the core functions thereof. The aircraft smart skin structure is often impacted by external objects during service, such as bird strikes, hail, gravels, and maintenance tools, which can easily cause loss of mechanical performance and reduction of load bearing capacity of the aircraft smart skin structure, threatening the safety of the structure or even the entire aircraft. Therefore, it is urgently required to carry out impact monitoring of the aircraft smart skin structure. In addition, since the impact on an aircraft structure is a random transient event that needs to be monitored at the moment of an impact, an impact monitoring system needs to be able to be installed on the aircraft for on-line and continuous impact monitoring, and the requirements of low power consumption and high reliability are met to adapt to an airborne working environment.

At present, most impact localization methods are designed to achieve accurate localization of impacts, but these methods require pre-acquisition of impact response signals of piezoelectric sensors or other acoustic emission sensors. Therefore, signal amplification circuits, time domain signal sampling circuits and computer systems for processing complex localization algorithms are required in the hardware of the impact monitoring system, and complex signal processing algorithms and impact localization algorithms need to be included in software architecture. These systems are bulky and power consuming, thereby limiting integration applications on the aircraft. For example, US 2016/0252438 A1 and CN 108 146 615 A disclose methods for locating an impact area of a composite structure, by means of an array of piezoelectric sensors, wherein an energy weighted factor is determined to represent the degree that each sensor is affected by an impact within the entire impact monitoring range.

In response to the foregoing problems, an airborne miniaturized impact region monitoring system is proposed and is being gradually applied. The system connects a piezoelectric sensor array directly to a comparator array in the system. Impact response signals output by the piezoelectric sensor array are converted into digital sequences through the comparator array. These digital sequences are collected through a programmable logic gate array, and an impact region monitoring method based on a digital sequence is solidified into the programmable logic gate array. The alarm of an impact region is achieved according to the collected digital sequences, thereby omitting hardware for data acquisition and signal amplification conditioning of a conventional impact monitoring system and simplifying a signal processing algorithm and an impact localization algorithm, and a complex computer system is not required. Moreover, the system divides a region to be monitored into several impact monitoring sub-regions according to the arrangement of sensors, and an impact region monitoring method is used for locating an impact event into one sub-region. Therefore, the system has multiple features such as small size, light weight, low power consumption, convenient installation and use, large monitoring region, real-time response to impact events, and efficient storage of digital sequences and impact alarm results corresponding to impact response signals.

However, a real aircraft often needs to perform impact monitoring on multiple large-region aircraft smart skin structures, such as a wing, a fuselage, a vertical tail and other smart skin structures. Therefore, it is usually necessary to use multiple impact monitoring nodes for network monitoring. When large-scale network impact monitoring is performed on the same structure by multiple monitoring nodes, there are two problems as follows:

(1) When monitoring regions of multiple monitoring nodes are adjacent, an impact occurring in one region may trigger other nodes to perform impact monitoring. If each node separately locates the impact, localization conflicts may be caused. Therefore, in actual applications, an impact localization algorithm is required to eliminate such conflicts, and impact records of multiple nodes are combined to determine a correct impact occurring region.

(2) There are often intermediate regions between adjacent monitoring regions. These intermediate regions do not belong to the monitoring range of any one node, but impact monitoring is also required. A localization algorithm working in a single node can only perform impact monitoring and localization on a region within the monitoring range of the node, and these intermediate regions cannot be located. Therefore, a new impact localization algorithm is needed to identify and locate impacts occurring on these intermediate regions.

In order to solve the foregoing problems, a composite structure impact region localization method based on a digital sequence energy weighting factor is proposed. The method defines an energy weighting factor characteristic parameter of a digital sequence, and is used for characterizing the degree of impact influence on each sensor within the entire impact monitoring range, thereby calculating the degree of impact influence on each sub-region within the monitoring range, and finally determining a sub-region which is most affected as an impact occurring sub-region. The present invention solves the problems of adjacent node localization conflicts and intermediate region localization blind regions occurring in the existing multi-node large-scale network monitoring.

Then, in order to achieve online and continuous impact monitoring, the composite structure impact region localization method based on a digital sequence energy weighting factor needs to be solidified into the programmable logic gate array of the miniaturized impact region monitoring system through embedded language programming. However, the method needs to sort and divide the features of a digital sequence, and the algorithm is more complex, which increases the difficulty of embedded programming implementation and improves the hardware requirements of an impact region monitoring system, thereby resulting in increased power consumption and reduced reliability. In addition, the impact region localization accuracy of the method needs to be improved. Therefore, it is necessary to propose a simple and reliable and more accurate impact region localization algorithm, which can reduce the power consumption of an impact region monitoring system, improve the system reliability, make the impact region monitoring system airborne, and also solve the foregoing problem of large-scale network impact monitoring.

## SUMMARY OF THE INVENTION

In order to solve the foregoing problems, the present invention proposes a truncated reverse-weighted sum based impact region localization method of aircraft smart skin, as defined by claim 1. The method can effectively avoid the use of sorting and division in an algorithm, and can improve the localization accuracy of an impact region and improve the reliability of an impact region monitoring system while reducing the processor complexity of the impact region monitoring system and the power consumption required during the calculation of the position of the impact region, which is conducive to the implementation of the airborne applications of the impact region monitoring system. Moreover, the method can also effectively solve the problem of localization conflicts existing in network monitoring of multiple impact region monitoring systems and the problem of difficulty in accurately locating an intermediate region.

The present invention adopts the following technical solutions to solve the technical problem:

A truncated reverse-weighted sum based impact region localization method of aircraft smart skin is provided. The impact region localization method includes: firstly, truncating each digital sequence of each piezoelectric sensor as a characteristic digital sequence according to a chronological order, and calculating a reverse-weighted value of the characteristic digital sequence; then, calculating, by a monitoring center according to the piezoelectric sensors constituting impact monitoring sub-regions, a reverse-weighted sum of each impact monitoring sub-region; and finally, identifying the impact monitoring sub-region with the maximum reverse-weighted sum as a region where an impact occurs.

M groups of piezoelectric sensor arrays are disposed in an impact monitoring region on the surface of an aircraft smart skin structure used in the impact region localization method, each piezoelectric sensor in each group of piezoelectric sensor arrays is connected to a data acquisition channel of an impact region monitoring system, all the impact region monitoring systems are connected to one monitoring center, and a total of P piezoelectric sensors are disposed in the entire monitoring region. The impact monitoring region is divided into sub-regions by using the position of each piezoelectric sensor disposed on the surface of the aircraft smart skin structure as a vertex of an impact monitoring sub-region. Each impact monitoring sub-region is composed of R vertexes, R being a natural number greater than 2. It is supposed that $Q$ impact monitoring sub-regions are obtained by division, Q being a natural number greater than 0. When an impact occurs in the structure, all the impact region monitoring systems obtain digital sequences corresponding to each piezoelectric sensor in a piezoelectric sensor array connected thereto, the length of each digital sequence of each piezoelectric sensor is set to be $K$, and each digital sequence is represented as DS($i$, $W_i$), where $i$ is a serial number of a point in each digital sequence, $i$ is a natural number greater than 0 and less than or equal to $K$, $W_i$ is a value of an $i^{th}$ point in each digital sequence, and $W_i$ has a value of 0 or 1.

The method includes the following steps:

step 1: truncating a digital sequence:

setting a truncating length as N that is a natural number greater than 0 and less than K, truncating a digital sequence of each piezoelectric sensor according to a chronological order, and truncating a digital sequence having a length of N as a characteristic digital sequence corresponding to the piezoelectric sensor from front to back, which is represented as TDS($j$, $W_j$), where j is a serial number of a point in the characteristic digital sequence, j is a natural number greater than 0 and less than or equal to N, $W_j$ is a value of a $j^{th}$ point in the characteristic digital sequence, and $W_j$ has a value of 0 or 1;

step 2: calculating a reverse-weighted value of a characteristic digital sequence:

the method for calculating a reverse-weighted value $RW_r$ of a characteristic digital sequence being as shown in Formula (1), $RW_r$ being a reverse-weighted value of a characteristic digital sequence corresponding to an $r^{th}$ piezoelectric sensor in the entire monitoring region, and r being greater than 0 and less than or equal to P, where a specific calculation method is: multiplying a value of a first point in the characteristic digital sequence by N, multiplying a value of a second point in the characteristic digital sequence by N-1, multiplying a value of a third point in the characteristic digital sequence by N-2, and so on, multiplying a value of an $N^{th}$ point in the characteristic digital sequence by 1, and adding the N values;

$$RW_r = \sum_{j=1}^{N}\left[\left(N+1-j\right)\times W_j\right] \qquad (1)$$

step 3: calculating a reverse-weighted sum of an impact monitoring sub-region:

calculating a sum $RWA_q$ of reverse-weighted values of the piezoelectric sensors at all vertexes of each impact monitoring sub-region in the impact monitoring region by using a method as shown in Formula (2):

$$RWA_q = \sum_{r=1}^{R} RW_r \qquad (2)$$

where $RW_r$ is a reverse-weighted value of a digital sequence of a piezoelectric sensor in vertexes constituting an impact monitoring sub-region, $RWA_q$ is a reverse-weighted sum of a $q^{th}$ impact monitoring sub-region in the entire impact monitoring region, and q is greater than 0 or less than or equal to Q; and

step 4: identifying an impact monitoring sub-region where an impact occurs:

identifying the impact monitoring sub-region corresponding to the maximum reverse-weighted sum of all the impact monitoring sub-regions as a region where an impact occurs.

The present invention has the following beneficial effects:

1. The present invention provides a multi-system joint localization method for network monitoring of multiple impact region monitoring systems, which solves the problem of localization conflicts when monitoring regions of the plurality of impact region monitoring systems are adjacent, and can accurately perform impact localization on an intermediate region.

2. The impact region localization method proposed by the present invention only needs to perform addition, subtraction and multiplication operations, thereby avoiding complex operations such as division and sorting, reducing the complexity of an algorithm, reducing the computation burden of the algorithm, reducing the hardware requirements of the impact region monitoring systems, and implementing the algorithm by using embedded programming. The reliability of the impact region monitoring systems is improved, and it is more conducive to airborne implementation.

3. Compared with a composite structure impact region localization method based on a digital sequence energy weighting factor, the present invention improves the accuracy of impact region localization, and can improve the smartness of an aircraft smart skin structure and reduce the maintenance cost thereof.

## BRIEF DESCRIPTION OF THE DRAWINGS

Fig. 1 is a flowchart showing steps of a truncated reverse-weighted sum based impact region localization method of aircraft smart skin.

Fig. 2 is a schematic diagram showing the arrangement of a piezoelectric sensor and an impact region monitoring system of a composite wing smart skin structure of an unmanned aerial vehicle.

Fig. 3 is a schematic diagram of an impact application position in Embodiment 1.

Fig. 4 is a diagram of impact digital sequences of 15 piezoelectric sensors in Embodiment 1.

Fig. 5 is a flowchart showing steps of an impact region localization method in Embodiment 1.

Fig. 6 is a distribution diagram of reverse-weighted values of 15 piezoelectric sensors in Embodiment 1.

Fig. 7 is a distribution diagram of reverse-weighted sums of 8 impact monitoring sub-regions in Embodiment 1.

Fig. 8 is a schematic diagram of an impact application position in Embodiment 2.

Fig. 9 is a diagram of impact digital sequences of 30 piezoelectric sensors in Embodiment 2.

Fig. 10 is a flowchart showing steps of an impact region localization method in Embodiment 2.

Fig. 11 is a distribution diagram of reverse-weighted values of 30 piezoelectric sensors in Embodiment 2.

Fig. 12 is a distribution diagram of reverse-weighted sums of 20 impact monitoring sub-regions in Embodiment 2.

## DETAILED DESCRIPTION OF THE INVENTION

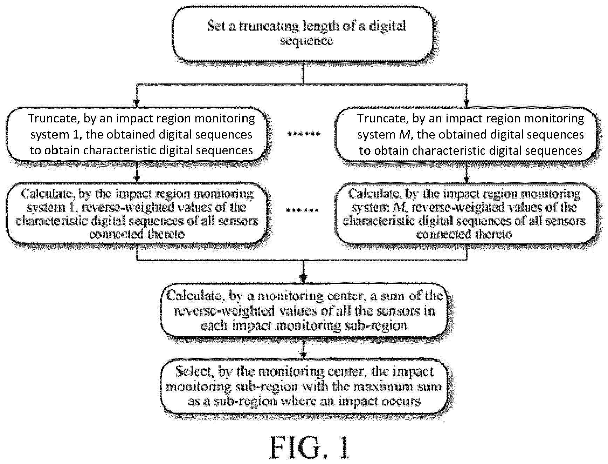

In order to better explain the technical solutions of the present invention, the present invention will be described in detail below with reference to the accompanying drawings and two embodiments. The steps of a truncated reverse-weighted sum based impact region localization method of aircraft smart skin are as shown in Fig. 1.

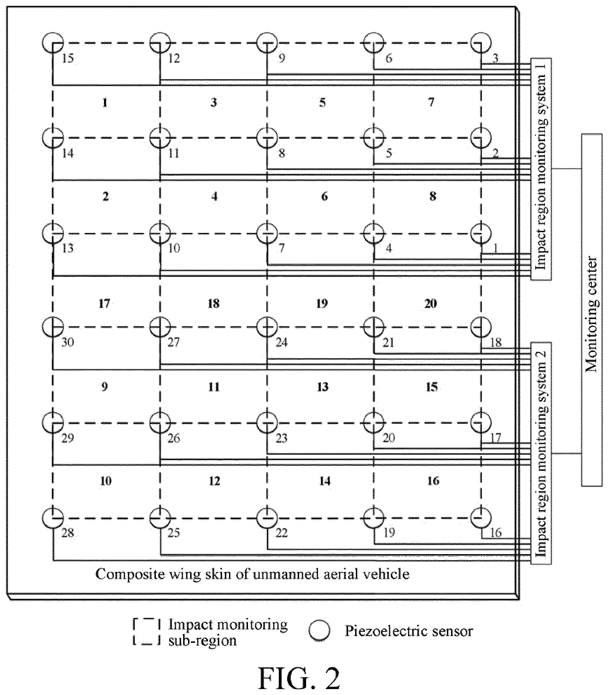

Piezoelectric sensors and impact region monitoring systems are arranged on a composite wing smart skin structure of an unmanned aerial vehicle, and impact monitoring is performed on a wing to illustrate a specific implementation process of the method of the present invention. As shown in Fig. 2, 30 piezoelectric sensors are arranged on an inner surface of the composite wing smart skin structure of the unmanned aerial vehicle, which are recorded as piezoelectric sensors 1 to 30, where the piezoelectric sensors 1 to 15 are connected to an impact region monitoring system 1. As shown in the figure, the piezoelectric sensors 1 to 15 constitute eight impact monitoring sub-regions, which are recorded as a sub-region 1 to a sub-region 8. The piezoelectric sensors 16 to 30 are connected to an impact region monitoring system 2, and also constitute eight impact monitoring sub-regions, which are recorded as a sub-region 9 to a sub-region 16. In addition, four intermediate sub-regions exist between monitoring regions of the impact region monitoring system 1 and the impact region monitoring system 2, which are recorded as a sub-region 17 to a sub-region 20. Each impact monitoring sub-region is surrounded by four piezoelectric sensors. Both the impact region monitoring systems 1 and 2 are connected to one monitoring center.

Embodiment 1

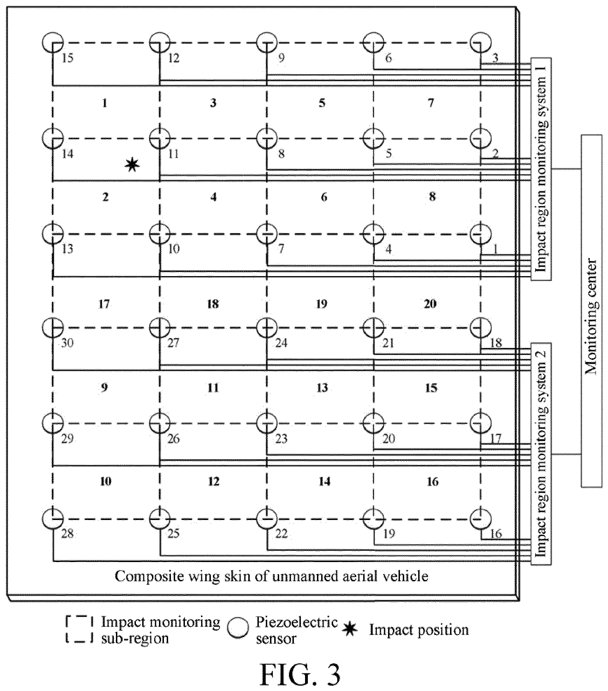

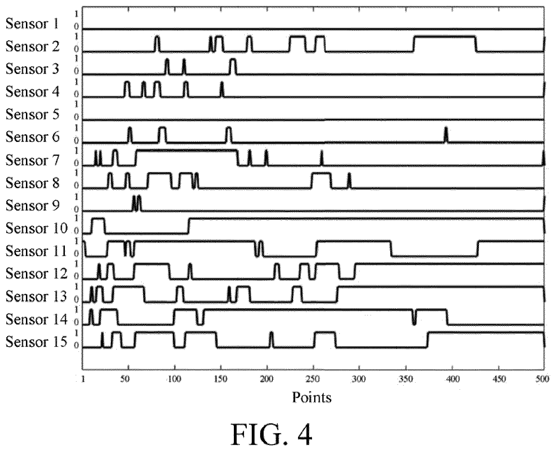

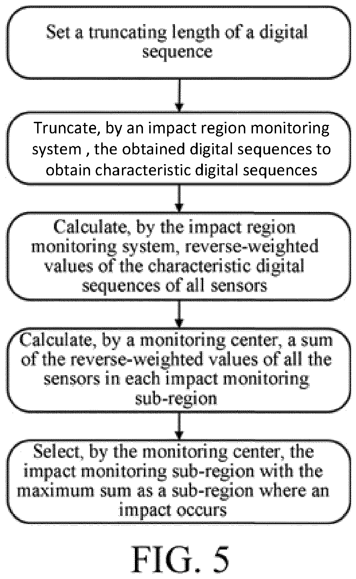

In the present embodiment, P piezoelectric sensors and M impact region monitoring systems are arranged on a composite wing smart skin structure of an unmanned aerial vehicle, and totally constitute Q impact monitoring sub-regions. Each impact monitoring sub-region is composed of R vertexes, where $P=15$, $M=1$, $Q=8$, and $R=4$. An impact is applied to the impact monitoring sub-region 2 at a position as shown in Fig. 3. The piezoelectric sensors 1 to 15 generate impact response signals, the impact region monitoring system 1 converts the response signals of the 15 piezoelectric sensors into 15 digital sequences, and each of the acquired digital sequences has a length of $K$, where $K=500$. The obtained digital sequences are as shown in Fig. 4. According to a flowchart of an impact region localization algorithm shown in Fig. 5, the working flow of the entire monitoring system is as follows:

1: Set a value $N$, truncate a digital sequence of each piezoelectric sensor obtained by an impact region monitoring system 1 according to a chronological order, and truncate a digital sequence having a length of $N$ as a characteristic digital sequence corresponding to the piezoelectric sensor from front to back, where $N=50$ in the present embodiment, that is, first 50 points of each digital sequence are truncated as the characteristic digital sequence of the piezoelectric sensor.

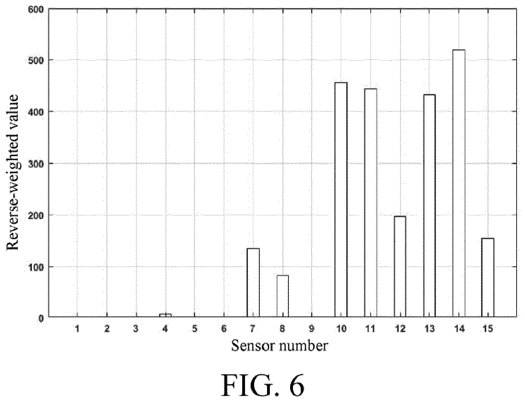

2: Calculate, by the impact region monitoring system 1, reverse-weighted values of characteristic digital sequences of piezoelectric sensors 1 to 15 according to the obtained characteristic digital sequences through Formula (1), results being shown in Fig. 6.

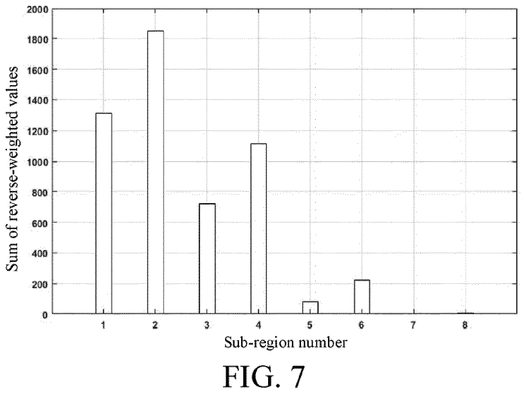

3: Calculate a sum of reverse-weighted values of four piezoelectric sensors at vertexes of each impact monitoring sub-region in eight impact monitoring sub-regions within an impact monitoring region, the distribution condition of the reverse-weighted sum of each impact monitoring sub-region being shown in Fig. 7.

4: Identify an impact monitoring sub-region where an impact occurs. It can be seen from Fig. 7 that an impact monitoring sub-region corresponding to the maximum reverse-weighted sum of all the impact monitoring sub-regions is the sub-region 2, and the impact monitoring sub-region is identified as an impact monitoring sub-region where an impact occurs, which is consistent with an impact monitoring sub-region where the impact actually occurs.

Embodiment 2

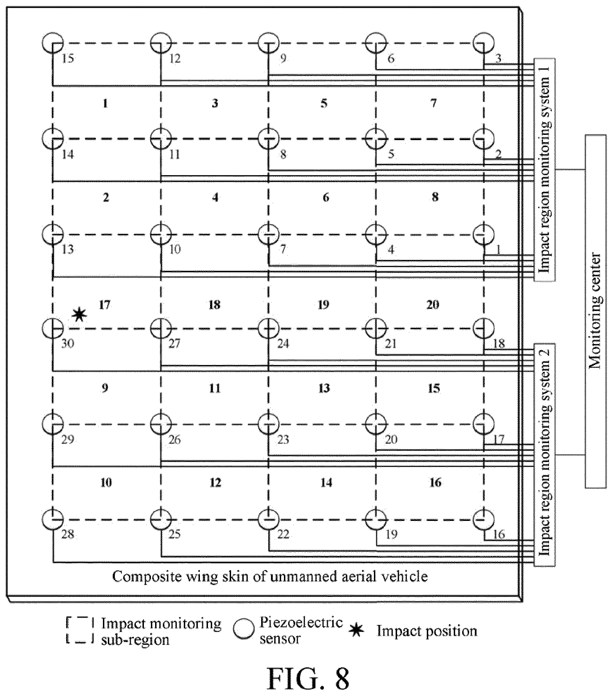

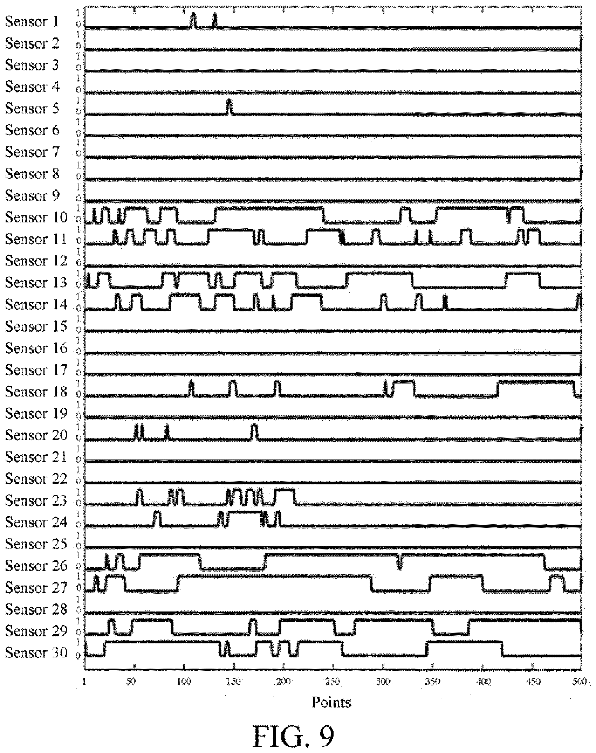

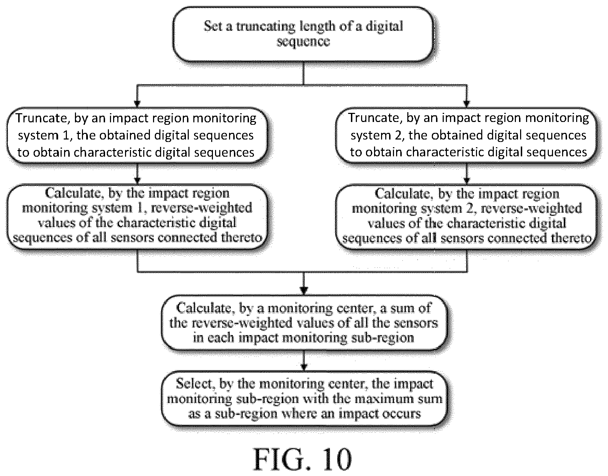

In the present embodiment, $P$ piezoelectric sensors and $M$ impact region monitoring systems are arranged on a composite wing smart skin structure of an unmanned aerial vehicle, and totally constitute $Q$ impact monitoring sub-regions. Each impact monitoring sub-region is composed of $R$ vertexes, where $P=30$, $M=2$, $Q=20$, and $R=4$. An impact is applied to the impact monitoring sub-region 17 at a position as shown in Fig. 8. The piezoelectric sensors 1 to 30 generate impact response signals, the impact region monitoring system 1 converts the response signals of the piezoelectric sensors 1 to 15 into digital sequences, the impact region monitoring system 2 converts the response signals of the piezoelectric sensors 16 to 30 into digital sequences, there are a total of 30 digital sequences, and each of the acquired digital sequences has a length of 500 points. The obtained digital sequences are as shown in Fig. 9. According to a flowchart of an impact region localization algorithm shown in Fig. 10, the working flow of the entire monitoring system is as follows:

1: Set a value $N$, truncate a digital sequence of each piezoelectric sensor obtained by impact region monitoring systems 1 and 2 according to a chronological order, and truncate a digital sequence having a length of $N$ as a characteristic digital sequence corresponding to the piezoelectric sensor from front to back, where $N=50$ in the present embodiment, that is, first 50 points of each digital sequence are truncated as the characteristic digital sequence of the piezoelectric sensor.

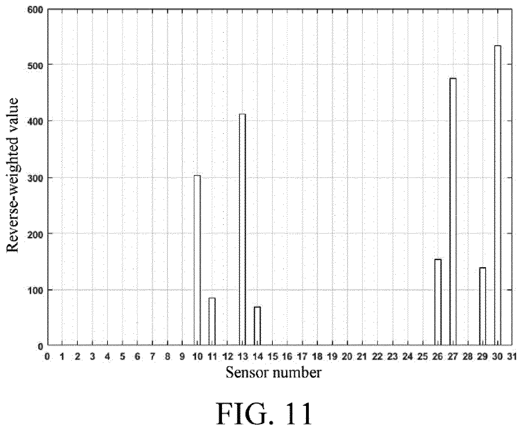

2: Respectively calculate, by the impact region monitoring systems 1 and 2, reverse-weighted values of characteristic digital sequences of piezoelectric sensors 1 to 15 and 16 to 30 according to the obtained characteristic digital sequences through Formula (1), results being shown in Fig. 11.

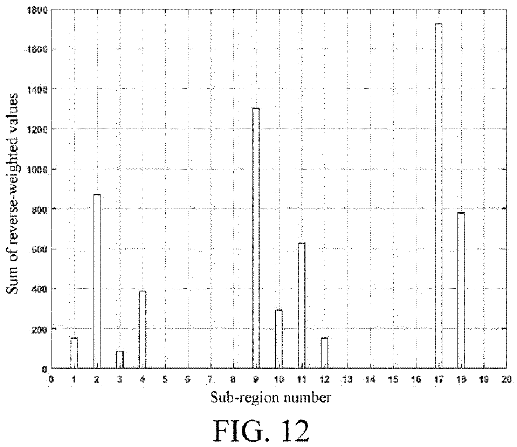

3: Calculate, by a monitoring center, a sum of reverse-weighted values of four piezoelectric sensors at vertexes of each impact monitoring sub-region in 20 impact monitoring sub-regions within an impact monitoring region, the distribution condition of the reverse-weighted sum of each impact monitoring sub-region being shown in Fig. 12.

4: Identify an impact monitoring sub-region where an impact occurs. It can be seen from Fig. 12 that an impact monitoring sub-region corresponding to the maximum reverse-weighted sum of all the impact monitoring sub-regions is the sub-region 17, and therefore the monitoring center identifies the impact monitoring sub-region as an impact monitoring sub-region where an impact occurs, which is consistent with an impact monitoring sub-region where the impact actually occurs.

The present invention defines a reverse-weighted value to indicate the degree of impact influence on each piezoelectric sensor within the monitoring range, and then uniformly evaluates the degrees of impact influences on all sub-regions and finally locates an impact occurring sub-region, and the problem of localization conflicts in multiple adjacent node monitoring regions and the problem of localization of an intermediate sub-region can be solved. Moreover, since only addition, subtraction and multiplication are needed, the complexity of an algorithm is reduced, the computation burden of the algorithm is reduced, the hardware requirements of an impact region monitoring system can be reduced, the reliability of the impact region monitoring system is improved, and it is more favorable for implementing an airborne impact region monitoring system.

**Claims**

1. A truncated reverse-weighted sum based impact region localization method of aircraft smart skin, the impact region localization method comprising: firstly, truncating each digital sequence of each piezoelectric sensor (1-30) as a characteristic digital sequence according to a chronological order, and calculating a reverse-weighted value of the characteristic digital sequence; then, calculating, by a monitoring center according to piezoelectric sensors (1-30) constituting impact monitoring sub-regions, a reverse-weighted sum of each impact monitoring sub-region; and finally, identifying the impact monitoring sub-region with the maximum reverse-weighted sum as a region where an impact occurs,

wherein M groups of piezoelectric sensor arrays are disposed in an impact monitoring region on the surface of an aircraft smart skin structure used in the impact region localization method, each piezoelectric sensor (1-30) in each group of piezoelectric sensor arrays is connected to a data acquisition channel of an impact region monitoring system, all the impact region monitoring systems are connected to one monitoring center, and a total of P piezoelectric sensors (1-30) are disposed in the entire monitoring region; the impact monitoring region is divided into sub-regions by using the position of each piezoelectric sensor (1-30) disposed on the surface of the aircraft smart skin structure as a vertex of an impact monitoring sub-region, each impact monitoring sub-region being composed of R vertexes, and R being a natural number greater than 2; it is supposed that Q impact monitoring sub-regions are obtained by division, Q being a natural number greater than 0; when an impact occurs in the aircraft smart skin structure, all the impact region monitoring systems obtain a digital sequence corresponding to each piezoelectric sensor (1-30) in a piezoelectric sensor array connected thereto, the length of the digital sequence of each piezoelectric sensor (1-30) is set to be $K$, and the digital sequence is represented as $DS(i, W_i)$, wherein i is a serial number of a point in the digital sequence, i is a natural number greater than 0 and less than or equal to $K$, $W_i$ is a value of an $i^{th}$ point in the digital sequence, and $W_i$ has a value of 0 or 1; the method comprises the following steps:

step 1: truncating a digital sequence:
setting a truncating length as $N$ that is a natural number greater than 0 and less than $K$, truncating a digital sequence of each piezoelectric sensor (1-30) according to a chronological order, and truncating a digital sequence having a length of $N$ as a characteristic digital sequence corresponding to the piezoelectric sensor (1-30) from front to back, which is represented as $TDS(j, W_j)$, wherein j is a serial number of a point in the characteristic digital sequence, j is a natural number greater than 0 and less than or equal to $N$, $W_j$ is a value of a $j^{th}$ point in the characteristic digital sequence, and $W_j$ has a value of 0 or 1;
step 2: calculating a reverse-weighted value of a characteristic digital sequence:
the method for calculating a reverse-weighted value $RW_r$ of a characteristic digital sequence being as shown in Formula (1), $RW_r$ being a reverse-weighted value of a characteristic digital sequence corresponding to an $r^{th}$ piezoelectric sensor in the entire monitoring region, and r being greater than 0 and less than or equal to P, wherein a specific calculation method is: multiplying a value of a first point in the characteristic digital sequence by $N$, multiplying a value of a second point in the characteristic digital sequence by $N$-1, multiplying a value of a third point in the characteristic digital sequence by $N$-2, and so on, multiplying a value of an $N^{th}$ point in the characteristic digital sequence by 1, and adding the $N$ values;

$$RW_r = \sum_{j=1}^{N} \left[ (N+1-j) \times W_j \right] \qquad (1)$$

step 3: calculating a reverse-weighted sum of an impact monitoring sub-region:
calculating a sum $RWA_q$ of reverse-weighted values of the piezoelectric sensors (1-30) at all vertexes of each impact monitoring sub-region in the impact monitoring region by using a method as shown in Formula (2):

$$RWA_q = \sum_{r=1}^{R} RW_r \qquad (2)$$

wherein $RW_r$ is a reverse-weighted value of a digital sequence of a piezoelectric sensor (1-30) in vertexes constituting an impact monitoring sub-region, $RWA_q$ is a reverse-weighted sum of a $q^{th}$ impact monitoring sub-region in the entire impact monitoring region, and $q$ is greater than 0 or less than or equal to $Q$; and step 4: identifying an impact monitoring sub-region where an impact occurs: identifying the impact monitoring sub-region corresponding to the maximum reverse-weighted sum of all the impact monitoring sub-regions as a region where an impact occurs.

**Patentansprüche**

1. Verfahren zur Ortung eines Aufprallbereichs einer intelligenten Flugzeughaut auf der Basis einer verkürzten umgekehrt gewichteten Summe, wobei das Verfahren zur Ortung eines Aufprallbereichs umfasst: erstens, Verkürzen jeder digitalen Sequenz jedes piezoelektrischen Sensors (1-30) als einer charakteristischen digitalen Sequenz gemäß einer chronologischen Reihenfolge und Berechnen eines umgekehrt gewichteten Werts der charakteristischen digitalen Sequenz; dann Berechnen über ein Überwachungszentrum gemäß piezoelektrischen Sensoren (1-30), die Aufprallüberwachungsunterbereiche bilden, einer umgekehrt gewichteten Summe jedes Aufprallüberwachungsunterbereichs; und schließlich Identifizieren des Aufprallüberwachungsunterbereichs mit der maximalen umgekehrt gewichteten Summe als einen Bereich, in dem ein Aufprall auftritt,

wobei $M$ Gruppen von piezoelektrischen Sensoranordnungen in einem Aufprallüberwachungsbereich auf der Oberfläche einer intelligenten Flugzeughautstruktur angeordnet sind, die bei dem Verfahren zur Ortung eines Aufprallbereichs verwendet wird, jeder piezoelektrische Sensor (1-30) in jeder Gruppe von piezoelektrischen Sensoranordnungen mit einem Datenerfassungskanal eines Aufprallbereichsüberwachungssystems verbunden ist, alle Aufprallbereichsüberwachungssysteme mit einem Überwachungszentrum verbunden sind und sich insgesamt $P$ piezoelektrische Sensoren (1-30) in dem gesamten Überwachungsbereich befinden; der Aufprallüberwachungsbereich unter Verwendung der Position jedes piezoelektrischen Sensors (1-30), der auf der Oberfläche der intelligenten Flugzeughautstruktur angeordnet ist, als einen Scheitelpunkt eines Aufprallüberwachungsunterbereichs in Unterbereiche eingeteilt wird, wobei jeder Aufprallüberwachungsunterbereich aus R Scheitelpunkten besteht und R eine natürliche Zahl ist, die größer als 2 ist; angenommen wird, dass Q Aufprallüberwachungsunterbereiche durch Division erhalten werden, wobei Q eine natürliche Zahl ist, die größer als 0 ist; wenn ein Aufprall in der intelligenten Flugzeughautstruktur auftritt, alle Aufprallbereichsüberwachungssysteme eine digitale Sequenz entsprechend jedem damit verbundenen piezoelektrischen Sensor (1-30) in einer piezoelektrischen Sensoranordnung erhalten, die Länge der digitalen Sequenz jedes piezoelektrischen Sensors (1-30) auf $K$ festgelegt ist und die digitale Sequenz als DS($i$, $W_i$) wiedergegeben wird, wobei i eine Seriennummer eines Punkts in der digitalen Sequenz ist, i eine natürliche Zahl ist, die größer als 0 und kleiner als oder gleich $K$ ist, $W_1$ ein Wert eines i-ten Punkts in der digitalen Sequenz ist und $W_i$ einen Wert von 0 oder 1 hat; das Verfahren die folgenden Schritte umfasst:

Schritt 1: Verkürzen einer digitalen Sequenz:
Festlegen einer Verkürzungslänge als $N$, die eine natürliche Zahl ist, die größer als 0 und kleiner als $K$ ist, Verkürzen einer digitalen Sequenz jedes piezoelektrischen Sensors (1-30) gemäß einer chronologischen Reihenfolge und Verkürzen einer digitalen Sequenz mit einer Länge von $N$ als einer charakteristischen digitalen Sequenz entsprechend dem piezoelektrischen Sensor (1-30) von vorne nach hinten, die als TDS($j$, $W_j$) wiedergegeben wird, wobei j eine Seriennummer eines Punkts in der charakteristischen digitalen Sequenz ist, $j$ eine natürliche Zahl ist, die größer als 0 und kleiner als oder gleich $N$ ist, $W_j$ ein Wert eines $j$-ten Punkts in der charakteristischen digitalen Sequenz ist und $W_j$ einen Wert von 0 oder 1 hat;
Schritt 2: Berechnen eines umgekehrt gewichteten Werts einer charakteristischen digitalen Sequenz:
wobei das Verfahren zum Berechnen eines umgekehrt gewichteten Werts $RW_r$ einer charakteristischen digitalen Sequenz wie in Formel (1) gezeigt ist, wobei $RW_r$ ein umgekehrt gewichteter Wert einer charakteristischen digitalen Sequenz entsprechend einem r-ten piezoelektrischen Sensor in dem gesamten Überwachungsbereich ist und wobei r größer als 0 und kleiner als oder gleich $P$ ist, wobei ein spezifisches Berechnungsverfahren ist: Multiplizieren eines Werts eines ersten Punkts in der charakteristischen digitalen Sequenz mit $N$, Multiplizieren eines Werts eines zweiten Punkts in der charakteristischen digitalen Sequenz mit $N$-1, Multiplizieren eines Werts eines dritten Punkts in der charakteristischen digitalen Sequenz mit $N$-2 und so weiter, Multiplizieren eines Werts eines $N$-ten Punkts in der charakteristischen digitalen Sequenz mit 1 und Addieren der $N$ Werte;

$$RW_r = \sum_{j=1}^{N} \left[ (N+1-j) \times W_j \right] \qquad (1)$$

Schritt 3: Berechnen einer umgekehrt gewichteten Summe eines Aufprallüberwachungsunterbereichs: Berechnen einer Summe $RWA_q$ von umgekehrt gewichteten Werten der piezoelektrischen Sensoren (1-30) an allen Scheitelpunkten jedes Aufprallüberwachungsunterbereichs in dem Aufprallüberwachungsbereich unter Einsatz eines Verfahrens wie in Formel (2) gezeigt:

$$RWA_q = \sum_{r=1}^{R} RW_r \qquad (2)$$

wobei $RW_r$ ein umgekehrt gewichteter Wert einer digitalen Sequenz eines piezoelektrischen Sensors (1-30) in Scheitelpunkten ist, der einen Aufprallüberwachungsunterbereich bildet, $RWA_q$ eine umgekehrt gewichtete Summe eines q-ten Aufprallüberwachungsunterbereichs in dem gesamten Aufprallüberwachungsbereich ist und q größer als 0 oder kleiner als oder gleich Q ist; und

Schritt 4: Identifizieren eines Aufprallüberwachungsunterbereichs, in dem ein Aufprall auftritt: Identifizieren des Aufprallüberwachungsunterbereichs entsprechend der maximalen umgekehrt gewichteten Summe aller Aufprallüberwachungsunterbereiche als einen Bereich, in dem ein Aufprall auftritt.

## Revendications

1. Procédé de localisation d'une région d'impact d'un revêtement intelligent d'aéronef en fonction d'une somme pondérée inverse tronquée, le procédé de localisation de la région d'impact comprenant : premièrement, le troncage de chaque séquence numérique de chaque capteur piézoélectrique (1-30) en tant que séquence numérique caractéristique conformément à un ordre chronologique, et le calcul d'une valeur pondérée inverse de la séquence numérique caractéristique ; ensuite le calcul, par un centre de surveillance conformément aux capteurs piézoélectriques (1-30) constituant des sous-régions de surveillance d'impact, d'une somme pondérée inverse de chaque sous-région de surveillance d'impact ; et, finalement, l'identification de la sous-région de surveillance d'impact présentant la somme pondérée inverse maximale en tant que région où un impact se produit,

dans lequel M groupes de réseaux de capteurs piézoélectriques sont disposés dans une région de surveillance d'impact sur la surface d'une structure de revêtement intelligent d'aéronef utilisée dans le procédé de localisation de la région d'impact, chaque capteur piézoélectrique (1-30) dans chaque groupe de réseaux de capteurs piézoélectriques est connecté à un canal d'acquisition de données d'un système de surveillance de région d'impact, tous les systèmes de surveillance de région d'impact sont connectés à un centre de surveillance, et un total de $P$ capteurs piézoélectriques (1-30) est disposé dans la région de surveillance entière ; la région de surveillance d'impact est divisée en sous-régions au moyen de l'utilisation de la position de chaque capteur piézoélectrique (1-30) disposé sur la surface de la structure de revêtement intelligent d'aéronef en tant que sommet d'une sous-région de surveillance d'impact, chaque sous-région de surveillance d'impact étant constituée de R sommets, et R étant un entier naturel supérieur à 2 ; il est supposé que Q sous-régions de surveillance d'impact sont obtenues par division, Q étant un entier naturel supérieur à 0 ; lorsqu'un impact se produit dans la structure de revêtement intelligent d'aéronef, tous les systèmes de surveillance de région d'impact obtiennent une séquence numérique correspondant à chaque capteur piézoélectrique (1-30) dans un réseau de capteurs piézoélectriques connecté aux systèmes, la longueur de la séquence numérique de chaque capteur piézoélectrique (1-30) est définie comme $K$, et la séquence numérique est représentée par DS($i$, $W_i$), $i$ étant un numéro d'ordre d'un point dans la séquence numérique, $i$ étant un entier naturel supérieur à 0 et inférieur ou égal à $K$, $W_i$ étant une valeur d'un $i^{ème}$ point dans la séquence numérique, et $W_i$ prenant une valeur égale à 0 ou 1 ; le procédé comprenant les étapes suivantes :

étape 1 : troncage d'une séquence numérique :
la définition d'une longueur de troncage comme $N$, lequel est un entier naturel supérieur à 0 et inférieur à $K$, le troncage d'une séquence numérique de chaque capteur piézoélectrique (1-30) conformément à un ordre chronologique, et le troncage d'une séquence numérique présentant une longueur $N$ en tant que séquence numérique caractéristique correspondant au capteur piézoélectrique (1-30) de l'avant vers l'arrière, laquelle est représentée par TDS($j$, $W_j$),$j$ étant un numéro d'ordre d'un point dans la séquence numérique caractéristique, $j$ étant un entier naturel supérieur à 0 et inférieur ou égal à $N$, $W_j$ étant une valeur d'un $j^{ième}$ point dans la séquence numérique caractéristique, et $W_j$ prenant une valeur égale à 0 ou 1 ;

étape 2 : calcul d'une valeur pondérée inverse d'une séquence numérique caractéristique :

le procédé de calcul d'une valeur pondérée inverse $RW_r$ d'une séquence numérique caractéristique étant comme illustrée dans la Formule (1), $RW_r$ étant une valeur pondérée inverse d'une séquence numérique caractéristique correspondant à un $r^{ième}$ capteur piézoélectrique dans la région de surveillance entière, et r étant supérieur à 0 et inférieur ou égal à $P$, un procédé de calcul spécifique comprenant : la multiplication par $N$ d'une valeur d'un premier point dans la séquence numérique caractéristique, la multiplication par $N-1$ d'une valeur d'un deuxième point dans la séquence numérique caractéristique, la multiplication par N-2 d'une valeur d'un troisième point dans la séquence numérique caractéristique, et ainsi de

$$RW_r = \sum_{j=1}^{N} \left[ \left( N + 1 - j \right) \times W_j \right] \qquad (1)$$

suite, la multiplication par 1 d'une valeur d'un $N^{ième}$ point dans la séquence numérique caractéristique, et l'addition des valeurs $N$ ;

étape 3 : le calcul d'une somme pondérée inverse d'une sous-région de surveillance d'impact :

le calcul d'une somme $RWA_q$ des valeurs pondérées inverses des capteurs piézoélectriques (1-30) au niveau de tous les sommets de chaque sous-région de surveillance d'impact dans la région de surveillance d'impact à l'aide d'un procédé comme illustré dans la Formule (2) :

$$RWA_q = \sum_{r=1}^{R} RW_r \qquad (2)$$

dans laquelle $RW_r$ est une valeur pondérée inverse d'une séquence numérique d'un capteur piézoélectrique (1-30) dans les sommets constituant une sous-région de surveillance d'impact, $RWA_q$ est une somme pondérée inverse d'une $q^{ième}$ sous-région de surveillance d'impact dans la région entière de surveillance d'impact, et q est supérieur à 0 ou inférieur ou égal à Q ; et

étape 4 : identification d'une sous-région de surveillance d'impact où un impact se produit : l'identification de la sous-région de surveillance d'impact correspondant à la somme pondérée inverse maximale de toutes les sous-régions de surveillance d'impact en tant que région où un impact se produit.

Set a truncating length of a digital
sequence

Truncate, by an impact region monitoring
system 1, the obtained digital sequences
to obtain characteristic digital sequences

••••••

Truncate, by an impact region monitoring
system *M*, the obtained digital sequences
to obtain characteristic digital sequences

Calculate, by the impact region monitoring
system 1, reverse-weighted values of the
characteristic digital sequences of all sensors
connected thereto

••••••

Calculate, by the impact region monitoring
system *M*, reverse-weighted values of the
characteristic digital sequences of all sensors
connected thereto

Calculate, by a monitoring center, a sum of the
reverse-weighted values of all the sensors in
each impact monitoring sub-region

Select, by the monitoring center, the impact
monitoring sub-region with the maximum sum
as a sub-region where an impact occurs

FIG. 1

FIG. 2

FIG. 3

FIG. 4

Set a truncating length of a digital sequence

Truncate, by an impact region monitoring system , the obtained digital sequences to obtain characteristic digital sequences

Calculate, by the impact region monitoring system, reverse-weighted values of the characteristic digital sequences of all sensors

Calculate, by a monitoring center, a sum of the reverse-weighted values of all the sensors in each impact monitoring sub-region

Select, by the monitoring center, the impact monitoring sub-region with the maximum sum as a sub-region where an impact occurs

# FIG. 5

FIG. 6

FIG. 7

Composite wing skin of unmanned aerial vehicle

⌐ ⌐ ┐ Impact monitoring     ◯ Piezoelectric    ✳ Impact position
└ ─ ┘ sub-region              sensor

FIG. 8

FIG. 9

Set a truncating length of a digital
sequence

Truncate, by an impact region monitoring
system 1, the obtained digital sequences
to obtain characteristic digital sequences

Truncate, by an impact region monitoring
system 2, the obtained digital sequences
to obtain characteristic digital sequences

Calculate, by the impact region
monitoring system 1, reverse-weighted
values of the characteristic digital
sequences of all sensors connected thereto

Calculate, by the impact region
monitoring system 2, reverse-weighted
values of the characteristic digital
sequences of all sensors connected thereto

Calculate, by a monitoring center, a sum of
the reverse-weighted values of all the sensors
in each impact monitoring sub-region

Select, by the monitoring center, the impact
monitoring sub-region with the maximum sum
as a sub-region where an impact occurs

FIG. 10

FIG. 11

FIG. 12

**EP 3 705 407 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160252438 A1

- CN 108146615 A